# EUROPEAN PATENT APPLICATION

(11) **EP 1 415 790 A1**
(43) Date of publication of application: **06.05.2004**
(21) Application number: 03256894.1
(22) Date of filing: 30.10.2003
(51) Int. Cl.: B29C 65/74, B65B 61/10, B65B 51/30

(54) **Film clamp for film sealing apparatus and method**

(30) Priority: 01.11.2002 US 286435
(71) Applicant: Shanklin Corporation, Ayer, Massachusetts 01432 (US)
(72) Inventor: Orsini, Thomas P., Leominster, MA 01453 (US)
(74) Representative: Roberts, Mark Peter

(57) **Abstract**

Film clamp for the lower or stationary jaw of a sealing machine, particularly the lower or stationary jaw of an L-bar sealing machine. Preferably the film clamp is constructed of a thermally conductive material and is configured to effectively dissipate heat. A closed loop feedback system can be used to regulate the applied power to the sealing element in order to maintain its temperature within a predetermined range to help prevent overheating of the film clamp and other jaw components.

## Description

Packaging machines for wrapping and sealing plastic film about an article conventionally utilize a heated wire to seal film layers to one another and to melt through the layers in order to separate one article from another as the articles pass through the machine. Current is supplied to the wire to heat the wire to a high temperature in order to effect the seal and cutting operation. The ideal appearance of the resulting seal is fine and neat as the film shrinks tightly around the package, especially where polypropylene films are involved. Such hot wires are typically used to form both end seals and side seals.

L-bar sealers are generally used to seal heat shrinkable plastic centerfolded film around an object to be packaged. The object to be packaged is wrapped with the film, and the L-sealer top jaw is lowered to cut and seal together abutting surfaces of the centerfold film. The L-bar makes two seals at one time, sealing both the edge of the centerfold wrap and also cutting and sealing across the width. Films such as polypropylene, PVC and polyethylene are typically sealed with L-bar sealers. The sealers can be manual, semi-automatic or fully automatic.

As the sealing element contacts the film and performs its intended function, it loses heat to the film as well as to the surrounding environment and near-by components. Accordingly, current must be continually or continuously, supplied to the sealing element in order to maintain the appropriate temperature to perform the intended operation. However, heating the sealing element causes a corresponding temperature increase in adjacent and near-by components as well as the framework of the apparatus, which can be highly undesirable. Indeed, where the framework is constructed of a polymeric material, excess heat migrating into the polymeric components can melt the same.

This heating of adjacent and near-by components has in some cases resulted in the elimination of the use of film clamps in the upper sealing jaw. Although such film clamps are desirable to hold the film in place during sealing, if such clamps become too hot, film in contact with the clamps will be heated and can begin to shrink prematurely. Premature film shrinking can result in poor package appearance or even a complete failure of the packaging process.

It therefore would be desirable to provide a seal system for an L-type sealing apparatus that utilizes film clamps and prevents their overheating by maintaining the temperature of the seal element within a desired range.

It further would be desirable to provide a film clamp in the lower or stationary jaw of an L-bar type sealing machine to effectuate a consistently high quality seal.

It further would be desirable to provide a film clamp that keeps the film from draping over the sealing element upon contact, and from depositing residue and potentially overheating and burning seals.

The problems of the prior art have been alleviated by the present invention, which provides an apparatus according to claim 1. One embodiment provides a film clamp for the lower or stationary jaw of a sealing machine, particularly the heated lower or stationary jaw of an L-bar sealing machine. Preferably the film clamp is constructed of a thermally conductive material and is configured to effectively dissipate heat. A closed loop feedback system can be used to regulate the applied power to the sealing element in order to maintain its temperature within a predetermined range to help prevent overheating of the film clamp and other jaw components. The use of the film clamp results in the film control required for consistent seal quality, especially when sealing heavier gauge films such as CURTUFF® (3 mils thick) commercially available from Sealed Air Corporation.

The invention will be further described, by way of example only, by reference to the following description and drawings, in which:-
Figure 1 is a perspective view of a seal jaw in an L-seal assembly in accordance with the present invention;
Figures 2 and 2A are views of a termination block of the seal jaw of Figure 1;
Figure 3 is an exploded perspective view of the jaw assembly of the seal jaw of Figure 1;
Figure 3A is a cross-sectional view of the jaw assembly of Figure 3; and
Figure 4 is a view, partially in section, showing a seal being made in accordance with the present invention.

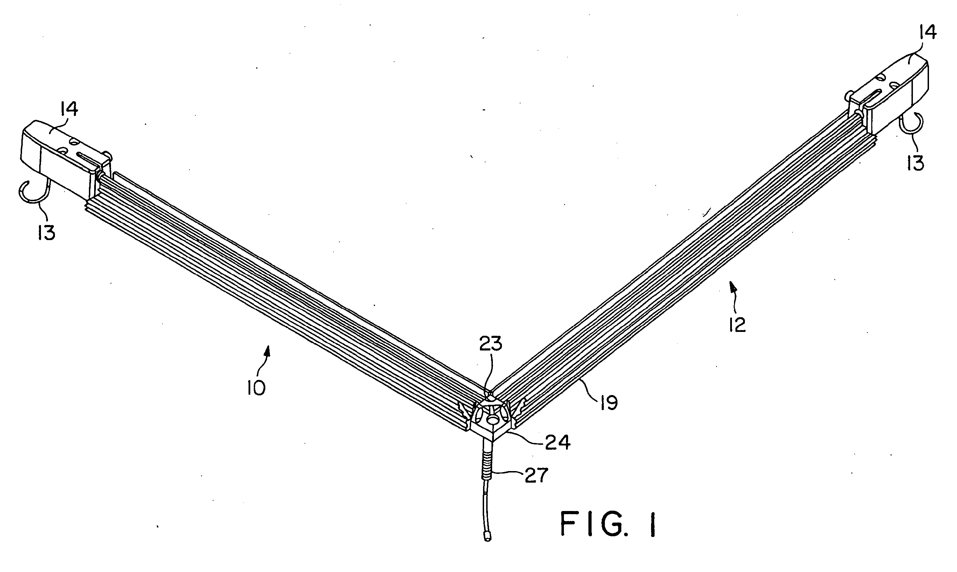

Turning now to Figure 1, there is a shown a portion of an L-seal apparatus for a packaging machine in accordance with an embodiment of the present invention. The bottom jaw of the L-bar includes a front jaw assembly 12 and a cross jaw assembly 10. For purposes of illustration, the cross jaw assembly 10 will be discussed to illustrate the construction of the L-bar, although those skilled in the art will appreciate that analogous components typically are used to make up the front jaw assembly 12. In the preferred embodiment shown, the bottom jaw assembly is stationary and the top jaw assembly (not shown) is movable from an open non-sealing position to a closed, sealing position that sandwiches the film between the top and bottom jaws. Those skilled in the art will appreciate that the bottom jaw assembly could be movable and the top jaw assembly stationary, or both the top and bottom jaws could be movable.

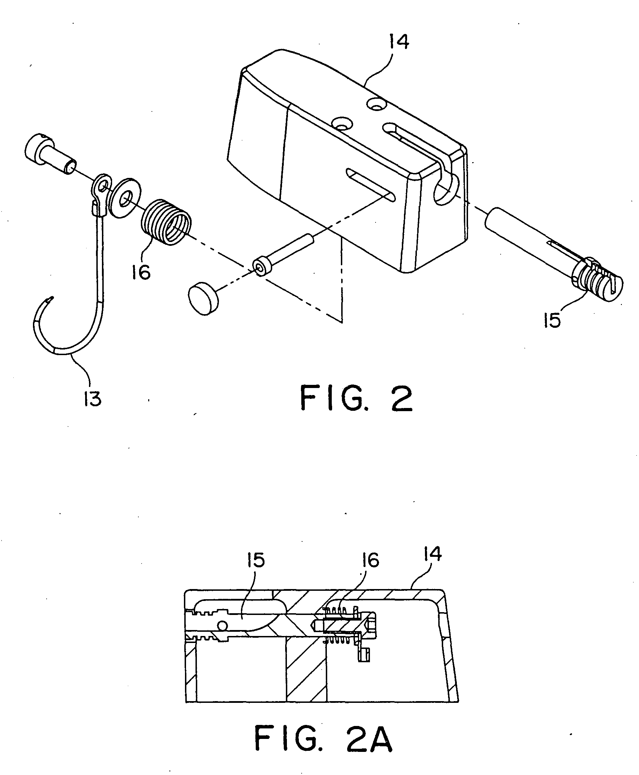

A termination block 14 (best seen in Figure 2) is located at each of the ends of the L-bar and holds the sealing element in place. To that end, a sealing element is supported in slotted sealing element terminal 15, and the terminal 15 rides in the block 14 to accommodate expansion and contraction of the sealing element due to its temperature variations. Compression spring 16 biases the terminal 15 inwardly as best seen in Figure 2A, thereby allowing the terminal 15 to accommodate the expansion and contraction of the seal element. A TEFLON shielded wire 13 is in electrical communication with the seal element and with a current supply source (not shown) for providing current to the sealing element to heat the element to the desired temperature.

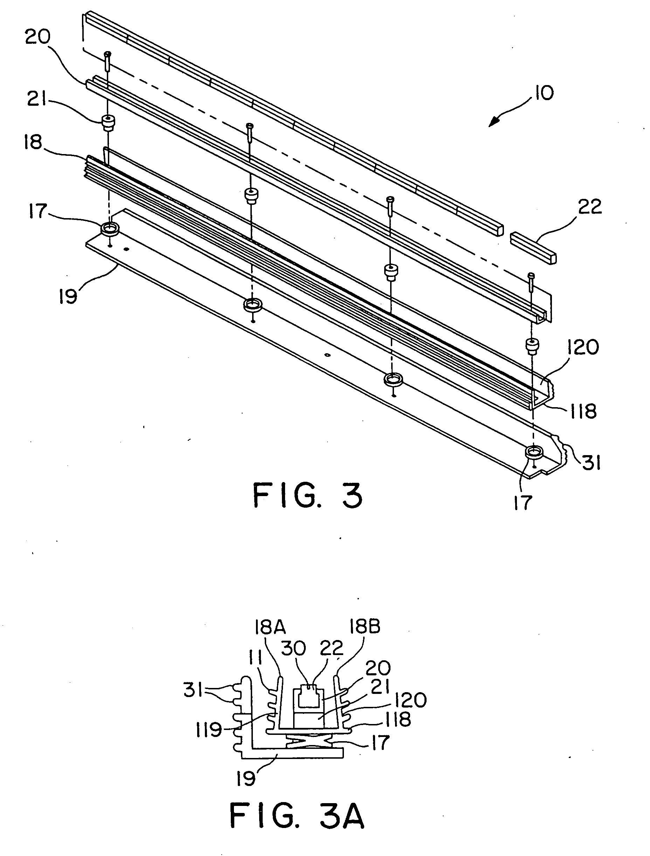

Figures 3 and 3A illustrate the various components of the bottom cross jaw assembly 10. Wave springs 17 support film clamp 18 on cross guard 19 as shown, and biases the film clamp 18 towards the film during sealing. The cross guard 19 is preferably constructed of a conductive material, preferably aluminum, and acts as a heat sink (with the aid of a plurality of projections 31 extending from its surface) to assist in dissipating heat from the sealing element. The film clamp is preferably an elongated linear substantially U-shaped member that can be formed by any suitable means, preferably by extrusion. Encompassed within the term "substantially U-shaped" is the provision for the opposite sides of film clamp 18 to extend upwardly at an inward angle, and surround bottom jaw member 20 that sits inside the opposite sides on spacers 21. By so tapering the film clamp towards the seal element, a large portion of the film clamp (e.g., the lower portion of the clamp) can be positioned as far away as possible from the hot sealing element to keep the clamp relatively cool without sacrificing the positioning of the top free end surfaces of the clamp as close to the sealing element as possible to minimize film waste (the closer the surface(s) of the film clamp that contact the film are to the sealing element, the less film is used in the packaging operation). Thus, the film clamp 18 includes a base 118 and opposite sides 119, 120 extending therefrom that terminate in respective free ends 18A and 18B. The spacers 21 support the bottom jaw member 20 away from the cross guard 19 and isolate heat away from the cross guard 19. Preferably the opposite sides 119, 120 of the clamp 18 include one or more upwardly sloping projections 11 that serve as a heat sink to dissipate heat from the sealing element. The opposite sides terminate in respective free ends 18A, 18B that provide the surface against which the film is sandwiched during sealing. These surfaces effectively clamp the film being sealed in place, keeping it taut during the sealing operation to effect a high quality seal. These surfaces are positioned higher than the sealing element 30 when the assembly is not in a sealing mode, so that when the top jaw assembly is forced downwardly against the bottom jaw assembly, the film first contacts the film clamp before contacting the sealing element. A distance of about 1/16 of an inch above the sealing element has been found to be suitable. The wave springs 17 on which the clamp 18 is supported allow for flexibility as the top seal jaw is compressed over the film to make the seal, forcing the clamp 18 downwardly so that the film contacts the seal element 30. The number and spacing of the wave springs 17 is not critical as long as they effectively function to bias the clamp as discussed in greater detail below. The bottom jaw member 20 supports insulator 22 that is formed with a central slot (Figure 3A) to hold the sealing element 30 and insulate it against heat and voltage.

Turning back to Figure 1, corner block 23 is coupled to corner mount 24 by any suitable means, such as with slotted screws 25 and hex screws 26. The corner block 23 is made of a thermally conductive material, preferably brass. A heat sensing element 37 such as a thermocouple is positioned to sense a temperature that correlates to the temperature of the sealing element. Since sensing the temperature of the sealing element directly is often difficult due to the lack of surface area of the sealing element, preferably the heat sensing element 37 is positioned to sense the temperature of the corner block 23. Preferably the heat sensing device is in direct contact with the corner block 23, although positioning the sensing device in close proximity to the corner block 23 also is suitable. The sensing device 27 is also in electrical communication with a controller board (not shown). The sealing element is positioned in curved slot 29 of the corner block where it makes the turn from the cross jaw to the front jaw. The sealing element is in good' thermal contact with the corner block 23. Since the corner block 23 and sensing device 27 are centrally located along the length of the sealing element (the cross jaw and front jaw are generally about the same length), the temperature sensed by the sensing device 27 is an excellent indication of the average temperature of components of the jaw assembly that are in contact with or are near the sealing element.

As set forth in co-pending patent application entitled "Apparatus and Method for Controlling Temperature of a Film Sealing Element" filed concurrently herewith, the disclosure of which is hereby incorporated by reference, heat is input to the seal element 30 in an impulse mode. For example, at the point of jaw closure where the hot seal element is pressing the film layers against a sealing pad surface, the closure of the top jaws activates a detection circuit that then triggers a specific duration of pulse of current through the seal element 30 to increase the temperature of the element to physically produce a seal and cut. The impulse replaces the heat that the seal wire loses during the sealing process, such as to the two webs of film and to the opposite seal surface, and the heat lost to the surrounding environment, particularly between seals. The suitable amount of current for the impulse mode and the duration of the impulse depend in part on the gauge and type of film to be sealed and the desired quality of the seal. For example, a voltage of 42 volts and a current of 48 amps are suitable for films typically used in L-bar sealers of this type. The current is kept constant; only the duration of the current is modified in response to the sensed temperature. Preferably the impulse duration may be from about 0.1 seconds to about 1.5 seconds, most preferably about 1 second. The heat sensing element 27 continuously or continually monitors the temperature of the mounting block 23. When the sensed temperature exceeds a predetermined value or range of values, the control board reduces the duration of the impulse a predetermined amount. One method for determining an appropriate temperature above which is considered excessive, thereby triggering the reduction of impulse current duration, is to determine the impulse current duration time set by the operator. From the impulse duration time selected, based on experience the operator can estimate the appropriate temperature of the sealing element (based, for example, on the nature of the film and the operating speed), and a suitable temperature above this estimated temperature is chosen above which would be considered excessive. A similar operation can be carried out to determine the minimum temperature necessary to effectuate a seal.

As a result, the seal element holder, the film clamps, the framework of the apparatus, and other adjacent components are kept relatively cool. Indeed, because of the excessive temperatures occurring in the prior art devices, a film clamp either could not be used, or had to be cooled with a cooling fluid that required extensive engineering and was problematic.

Suitable sealing elements 30 include wires, bars and blades. Preferably the sealing element 30 is an elongated blade having a uniform cross-section. The uniform cross-section allows the blade to be turned over in the event the cutting edge becomes dull, thereby doubling its useful life.

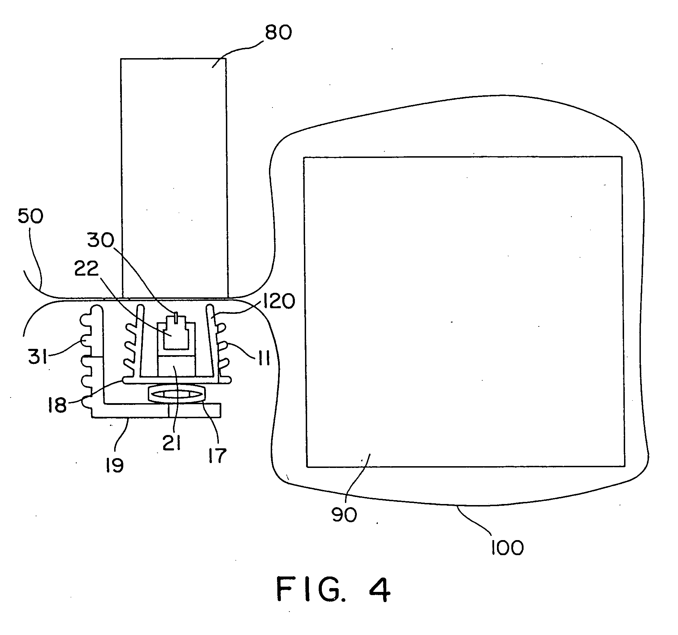

Turning now to Figure 4, the operation of the film clamp is shown with reference to the front jaw assembly. The film 100 is shown encasing a package 90 and extending beyond the package 90 between the top jaw assembly 80 and bottom jaw assembly, specifically, the film clamp 18. The top jaw 80 pivots downwardly towards the bottom jaw and presses against the film clamps 18 and seal blade 30, compressing the film under pressure to cut and seal the film. As the film 100 to be sealed is pushed down into the sealing element, it first contacts the film clamp 18. As the force continues, the clamp moves downwardly against the bias of the spring(s) 17, causing the film to contact the sealing element, and the sealing element seals and cuts the film. During this operation, the film clamp 18 holds the film 10 firmly against the top jaw and in a plane to enhance the seal quality. As the sealing and cut progress through the film 10, sealed edges of the overwrap and selvage 50 draw away from the heating element and each other in a controlled fashion, resulting in an optimal seal configuration. As the pressure is released, the film clamp 18 lifts the cut and sealed film up and away from the heating element (due to the biasing of the spring(s) 17). This lift keeps the film from dragging and depositing undesirable residue on the sealing element, which conventionally required frequent cleaning. In addition, lifting protects the quality of the sealed overwrap. Extra film selvage 50 is cut off in the sealing process.

Preferably the film clamps of the present invention are positioned in the jaw assembly housing the sealing element, which most preferably is the lower and stationary jaw assembly.

## Claims

1. Apparatus for sealing a plastic film, comprising:
a top jaw assembly and a bottom jaw assembly housing a sealing element, said top jaw assembly and bottom jaw assembly being movable with respect to each other;
a source of power to heat said sealing element to a temperature effective for sealing said plastic film; and
a film clamp in said bottom jaw assembly having at least one surface for positioning said film with respect to said sealing element.

2. The apparatus of claim 1, wherein said bottom jaw assembly is stationary and said top jaw assembly is movable.

3. The apparatus of claim 1 or 2, wherein said film clamp comprises a plurality of projections for dissipating heat. ,

4. The apparatus of any one of the preceding claims, further comprising a spring in said bottom jaw for biasing said film clamp towards said top jaw assembly.

5. The apparatus of claim 4, wherein said biasing of said film clamp maintains said film out of contact with said sealing element after the sealing operation has been completed.

6. The apparatus of any one of the preceding claims, wherein said film clamp is movable between a first pre-sealing position wherein said at least one surface positions said film above and out of contact with said sealing element and a second sealing position wherein said at least one surface positions said film in contact with said sealing element.

7. The apparatus of claim 6, wherein said film clamp is movable between said first and second positions upon the application of pressure from said top jaw assembly.

8. The apparatus of claim 6 or 7, further comprising at least one spring in said bottom jaw assembly supporting said film clamp, and wherein said at least one spring is in a compressed state when said film clamp is in said second position.

9. The apparatus of any one of the preceding claims, wherein said film clamp is substantially U-shaped and comprises a base and a pair of opposite sides terminating in a respective pair of free ends.

10. The apparatus of claim 9, wherein said opposite sides of said film clamp taper inwardly towards said sealing element.

11. A method for sealing film about an article, comprising:
providing upper and lower sealing jaws movable with respect to each other, said lower sealing jaw comprising a sealing element and a film clamp;
compressing said film between said upper sealing jaw and said and lower sealing jaws so as to cause said film to contact said film clamp; and
further compressing said film between said upper sealing jaw and said lower sealing jaw so as to cause said film to contact said sealing element to seal said film.

12. The method of claim 11, wherein during said first compressing step said film clamp is in a first pre-sealing position wherein said film clamp positions said film out of contact with said sealing element and during said further compressing step said film clamp is in a second sealing position wherein said film clamp positions said film in contact with said sealing element.

13. The method of claim 12, further comprising terminating compression of said film to cause said film clamp to return to said first position.

14. A method for sealing film about an article, comprising:
providing a movable upper jaw and a stationary lower jaw, said lower jaw comprising a sealing element and a film clamp;
positioning said sealing film between said upper and lower jaw;
moving said upper jaw towards said lower jaw and forcing said sealing film on said film clamp above said sealing element; and
contacting said upper jaw and said lower jaw so as to force said film to contact said sealing element to seal said film.

15. The method of claim 14, wherein said film clamp is movable between a first non-sealing position wherein said film clamp positions said film out of contact with said sealing element and a second sealing position wherein said film clamp positions said film in contact with said sealing element.

16. The method of claim 15, further comprising terminating contact between said upper and lower jaws to cause said film clamp to return to said first position.
